# EUROPEAN PATENT APPLICATION

(11) **EP 2 101 483 A1**
(43) Date of publication of application: **16.09.2009**
(21) Application number: 07720924.5
(22) Date of filing: 23.04.2007
(51) Int. Cl.: H04N 5/00

(54) **A SYSTEM USING DOT-READING OPERATING APPARATUS TO OPERATE TV SET-TOP-BOX**

(30) Priority: 31.12.2006 CN 200610171605
(71) Applicant: Beijing Huaqi Information Digital Technology Co., Ltd., Haidian District Beijing 100080 (CN); Beijing Huaqi Digital Lab Co., Ltd., Haidian District Beijing 100080 (CN)
(72) Inventor: ZHOU, Chaohui, Beijing 100080 (CN); LI, Weiwei, Beijing 100080 (CN)
(74) Representative: Beck & Rössig European Patent Attorneys
(86) International application number: PCT/CN2007/001351
(87) International publication number: WO 2008/080273

(57) **Abstract**

A system using a dot-reading operating apparatus to operate a TV STB is provided, which includes: a channel-selecting table, the image code which is preset on an object surface printed the channel-selecting table and includes the dot-reading information code, a dot-reading operating apparatus which includes an operating-signal processing module comprising an operating-signal receiving module, an memory module, an operating processor and an operating-signal transmitting module which includes a remote signal receiving module, a remote control memory module, a remote control processor, and a remote signal transmitting module receiving the data signal from the remote control processor and transmitting the data signal. The system can be realized by tiny structure changes or loading software to the dot-reading apparatus and TV STB of prior ate, and the cost is reduced.

## Description

### Field of the invention

The application relates to a system using dot-reading apparatus to achieve control functions, more particularly, to a system using dot-reading operating apparatus to read the image code preset on an object surface and operate TV set-top-box.

### Background of the invention

With the improvement of people's material and culture levels, TV, as a consumer electronic product used in daily recreational entertainment, is increasingly popular with people, and with the increasing popularization of the digital TV and the increase of the number of the TV channels, the TV set-top-box, since it can match the present TV to achieve digitized function, becomes a daily household electric appliance of consumer's family. The said TV set-top-box is an important device of the receiver, after realizing the digitalization of broadcast medium. The TV set-top-box is classified into two types according to the different functions, one type aims at viewing TV, such as the set-top-box for charging for cable TV, the set-top-box for receiving programs of digital TV, etc.; and the other is used for acquiring other information by TV, such as Web TV, etc. In fact, with the development of these two types of set-top-boxes, the distinction in function between the two types of set-top-boxes turns gradually disappearing. Some TV set-top-boxes set on TV set can receive programs and switch channels via the remote controller or key-press operated by TV watchers, and their main function is to control the watching of some pay TV programs. Recently, with the digitalization of broadcast-TV programs and rapid popularity of Internet, the function of the set-top-box becomes more and more strong, and the role of set-top-box develops from a device for singly charging for decoding into a digitized electronic device combining the functions of decompression, Internet browse, charging for decoding and interactive control. Whereas, there exists inconvenience for the operation and presetting on operating the TV set-top-box, which not only increases the difficulty in user's operation but also increases the difficulty in memorizing the corresponding relationship between the TV set-top-box and the TV channels for users.

In addition, with the advancement of the electronic technology, an electronic device can store a lot of data, and then a method of making image code on paper or other objects and a device applying the said image code are provided in prior arts, such as Chinese inventive application 02122633.4, in which an image code is preset on the surface of an object printed with a target object, and obtained by an image reading device, and a processing unit decodes the code to obtain the corresponding information stored in a memory, such as audio information, etc., thus achieves the aim that the relevant information corresponding with the touched target object can be heard or saw by clicking the target object on the object with a device such as a dot-touch pen.

### Summary of the invention

The object of the present application is to provide a system using a dot-reading operating apparatus to operate a TV set-top-box, and the technical issue to be solved in the present application is to make users read the image code preset on the surface of an object with the dot-reading operating apparatus, allow the TV set-top-box to receive relevant signals through operation, and finally realize the transformation of remote signals recognizable by the TV set-top-box.

The object and technical issue of the present application are achieved by the following technical scheme. According to the present application, a system using a dot-reading operating apparatus to operate a TV set-top-box, comprises:
a channel-selecting table, comprising letters or figures for selecting TV channels which are visibly printed on an object surface; and an image code which is preset on the object surface printed with the channel-selecting table including a dot-reading information code which is recognizable by the dot-reading operating apparatus and is used for denoting the TV channel, wherein said dot-reading information codes are corresponding with said image codes for selecting the letter or figure denoting TV channel and preset on the object surface printed by different inks;
a dot-reading operating apparatus, comprising an image reading unit for obtaining the image code; an operating processor for receiving the image code transmitted by the image reading unit and decoding the image code into the dot-reading information code recognizable by the dot-reading operating apparatus for denoting the selected TV channel so as to transmit the dot-reading information code; and an operating-signal output module for receiving the dot-reading information code transmitted by the operating processor and packing the dot-reading information code into output data signals to send the output data signals;
a TV set-top-box comprising:
   an operating-signal processing module including an operating-signal receiving module for receiving the output data signal sent by the dot-reading operating apparatus and
   decoding the output data signal into the dot-reading information code and transmitting the dot-reading information code; a memory module for storing the preset TV channel data recognizable by the TV set-top-box and an information table pre-established by the corresponding relationship between the TV channel data and the dot-reading information code; a set-top-box processor for receiving the dot-reading information code from the operating-signal receiving module and reading the information table from the memory module to obtain a remote control data of the selected TV channel corresponding the dot-reading information code and transmitting the remote control data; and an operating-signal transmitting module, for receiving the remote control data from the set-top-box processor and transmitting the remote control data;
   and a remote signal processing module including a remote signal receiving module for receiving the remote control data from the operating-signal processing module and transmitting the remote control data; a remote control memory module for storing the remote control signal of the TV set-top-box and a mapping table for establishing the corresponding relationship between the TV channel data and the remote control signal; a remote control processor for receiving the remote control data to obtain a TV recognizable data signal according to the mapping table and transmitting the data signal; and a remote signal transmitting module for receiving the data signal from the remote control processor and sending the data signal.

The operating-signal output module of the dot-reading operating apparatus may comprise a data receiving unit for receiving the dot-reading information code from the operating processor; a data processing unit for reading the dot-reading information code from the data receiving unit and packing the code into the output data signal; and a data transmitting unit for reading the output data signal processed by the data processing unit and outputting the output data signal to the operating-signal processing module of the TV set-top-box.

The operating-signal receiving module of the operating-signal processing module of the TV set-top-box may comprise a signal receiving unit for receiving the output data signal from the dot-reading operating apparatus; a signal transforming unit for obtaining the output data signal received by the signal receiving unit and transform output data signal to the dot-reading information code so as to transmitting the dot-reading information code; and a signal transmitting unit for receiving the dot-reading information code from the signal transforming unit and transmitting the dot-reading information code.

The image code is microcode printed by infrared ink.

The image reading unit of the dot-reading operating apparatus is a CMOS sensor or a CCD sensor.

The operating-signal output module of the dot-reading operating apparatus communicates with the operating-signal receiving module of the TV set-top-box by wireless.

The operating-signal output module of the dot-reading operating apparatus and the operating-signal receiving module of the TV set-top-box are selected from a wireless USB interface module, a Bluetooth interface module, an infrared interface module, a 1394 interface module, a radio frequency interface module or frequency modulation interface module.

Through the above technical scheme, the system using the dot-reading operating apparatus to operate the TV set-top-box in the present application at least has the advantages as follows:
1. In the present application, the image code preset on the object surface is read by using the dot-reading operating apparatus, the TV set-top-box receives the content of the selected TV channel corresponding with the image code by operating the signal transmission, and finally the remote control of the TV set-top-box is controlled. Meanwhile, there is also a channel-selecting table on the object surface where the image code is set , the selected TV channel corresponding with the image code is corresponding with the letters or figures in the channel-selecting table for selecting the channel, namely different letters or figures in the channel-selecting table are corresponding with different image codes. Therefore, by only using the dot-reading operating apparatus to read the image code on the object surface, the users select the corresponding data of the selected TV channel in the information table stored in the TV channel memory module according to the content of the channel-selecting table, thus simplifying the process for selecting the TV channel, simplifying the memory of the corresponding relation between the setting of the existing TV set-top-box remoter and the TV channel, improving the convenience of operation, and shortening the time for selecting the TV channels by the users;
2. The structure of the dot-reading operating system in the present application is simple, and without changing the structure of the dot-reading device in the prior arts and adding corresponding modules to the hardware or software of the existing TV set-top-box, the object of the present application can be achieved, which can help to cost reduction; the system using the dot-reading operating apparatus to operate the TV set-top-box can be constantly updated by changing the content setting of the channel-selecting table.

### Brief description of the drawing

FIG. 1 shows a schematic diagram of the channel-selecting table and the image code corresponding with the letters or figures for selecting channel in the present application.
FIG. 2 shows a schematic diagram in accordance with the embodiment of the present application.

### Embodiment

In order to further illustrate the technical scheme to achieve the intended object and the efficacy of the present application, the embodiments, structure, characteristics and efficacy of the system using the dot-reading operating apparatus to operate the TV set-top-box provided by the present application are described in detail as follows, through incorporating with the accompanying drawings and the preferred embodiment.

According to the present application, the system using the dot-reading operating apparatus to operate the TV set-top-box comprises: a channel-selecting table comprising letters or figures for selecting TV channels which are printed on an object surface; an image code which is preset on the object surface printed with the channel-selecting table and corresponding with the letters or figures for selecting TV channels; a dot-reading operating apparatus for reading the image code and receiving the information code from it according to the image code; and selecting the selected TV channel corresponding with the information code and transmitting to the TV set-top-box.

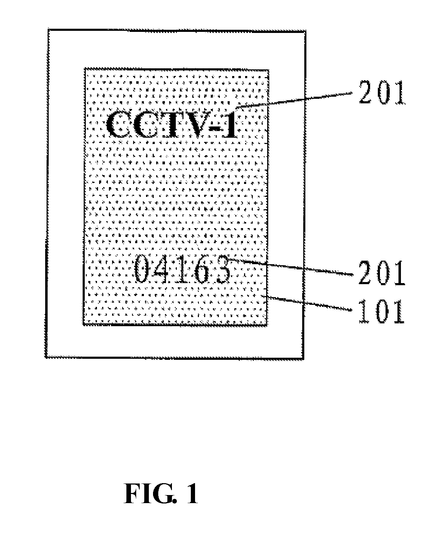

FIG. 1 shows a schematic diagram of the channel-selecting table and the image code corresponding with the letters or figures for selecting channel, wherein, the channel-selecting table and the image code 101 are preset on an object surface by using different colors of inks, and the letter or figure 201 for the selected TV channel is corresponding with the image code 101 containing the information code for denoting the selected TV channel. As shown in the FIG., the letter "CCTV-1" for the selected TV channel and its code 201 are set on an object surface as the channel-selecting table, and the image code 101 is set on the region of the letter and its code 201. The object which the channel-selecting table and the image code are printed on comprises paper or plastic.

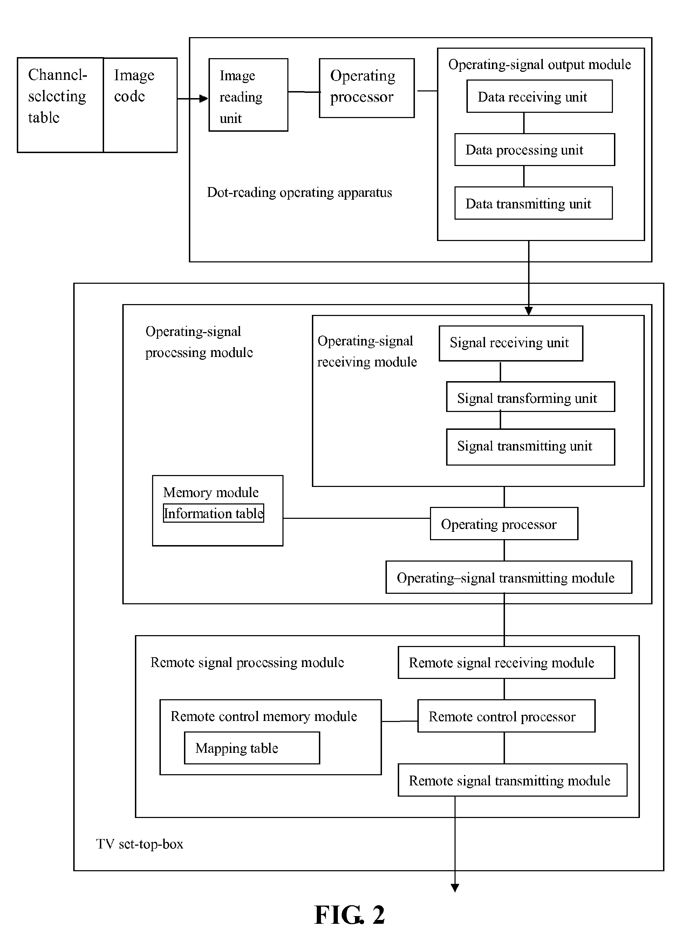

FIG. 2 shows a schematic diagram in accordance with the embodiment of the present application. Wherein, the dot-reading operating apparatus comprises: an image reading unit comprising a CMOS sensor or CCD sensor, for obtaining an image code 101 containing the dot-reading information code for denoting the selected TV channel, wherein, the image code 101 and the figure or letter 201 corresponding with the selected TV channel are preset on an object surface by different inks, and the figure or letter 201 corresponding with the selected TV channel are visibly printed on the object surface, and the image code in this embodiment is microcode printed by a infrared ink; an operating processor, for obtaining and decoding the image code transmitted from the image reading unit to obtain the dot-reading information code recognizable by the dot-reading operating apparatus for denoting the selected TV channel and transmitting the dot-reading information code; an operating-signal output module comprising a data receiving unit, for receiving the dot-reading information code from the operating processor; a data processing unit for exacting the dot-reading information code from the data receiving unit and packing it into an output data signal, and a data transmitting unit for extracting the output data signal transformed by the data processing unit and sending output data signal to the operating-signal processing module in the TV set-top-box;

Concretely, further referring to FIG. 2, the image code in the channel-selecting table is a plurality of dots 101 printed on the surface of a piece of paper or other objects with infrared ink or other special-color inks, or other invisible identification codes recognizable by the dot-reading operating apparatus (in the schematic diagram in this embodiment, the dots are magnified by certain times, but under normal condition, the dots are hardly identifiable by naked eye). In order to avoid wrongly or inaccurately reading, the ink color used on the dots 101 should be different from that used on the figure or letter 201 or the object surface. The image reading unit in the above dot-reading operating apparatus transmits a band of infrared light to the figure or letter 201 on the object surface corresponding with the selected TV channel, wherein the said image code 101 is set with the figure or letter 201, meanwhile, the optical reading unit receives a responded image as the amplified image, and sends the electrical signal of the image to the operating processor, and the operating processor decodes the image code 101 to obtain the dot-reading information code corresponding with the image code 101 and transmits the dot-reading information code to the operating-signal output module. The light transmitted from the image reading unit may also be other special colored lights, such as blue light, etc. The technology for setting the image code and obtaining the image by the image reading unit refers to China application number 02122633.4 and 200420067103.1, which isn't described hereinafter. The operating-signal output module receives the dot-reading information codes, and packs the dot-reading information codes into the output data signals, and finally sends the output data signals.

As shown in FIG. 2, the TV set-top-box comprises an operating-signal processing module, which includes: an operating-signal receiving module comprising a signal receiving unit for receiving the output data signal from the dot-reading operating apparatus, a signal transforming unit for obtaining the output data received by the signal receiving unit, transforming it into the dot-reading information code, and transmitting the dot-reading information code, a signal transmitting unit for receiving the dot-reading information code from the signal transforming unit and transmitting the dot-reading information code; a memory module for storing the preset TV channel data recognizable by the TV set-top-box and an information table for pre-establishing the corresponding relationship between the TV channel data and the dot-reading information code; a set-top-box processor for receiving the dot-reading information code from the operating-signal receiving module and reading the information table from the memory module to obtain a remote control data of the selected TV channel corresponding the dot-reading information code and transmitting the remote control data; and an operating-signal transmitting module, for receiving the remote control data from the set-top-box processor and transmitting the remote control data;
a remote signal processing module including a remote signal receiving module for receiving the remote control data from the operating-signal processing module and transmitting the remote control data; a remote control memory module for storing the remote control signal of the TV set-top-box and a mapping table for establishing the corresponding relationship between the TV channel data and the remote control signal; a remote control processor for receiving the remote control data to obtain a TV recognizable data signal according to the mapping table and transmitting the data signal; and a remote signal transmitting module for receiving the data signal from the remote control processor and sending the data signal.

FIG. 2 shows a schematic diagram of a system using a dot-reading operating apparatus to operate a TV set-top-box, wherein the operating-signal output module of the dot-reading operating apparatus communicates with the operating-signal receiving module of the TV set-top-box by wireless. Concretely, the data output device and data receiving device are selected from a wireless USB interface module, a Bluetooth interface module, an infrared interface module, a 1394 interface module, a radio frequency interface module or frequency modulation interface module.

## Claims

1. A system using a dot-reading operating apparatus to operate a TV set-top-box, comprising:
a channel-selecting table, comprising letters or figures for selecting TV channels which are visibly printed on an object surface; and an image code which is preset on the object surface printed with the channel-selecting table including a dot-reading information code which is recognizable by the dot-reading operating apparatus and is used for denoting the TV channel, wherein said dot-reading information codes are corresponding with said image codes for selecting the letter or figure denoting TV channel and preset on the object surface printed by different inks;
a dot-reading operating apparatus, comprising an image reading unit for obtaining the image code; an operating processor for receiving the image code transmitted by the image reading unit and decoding the image code into the dot-reading information code recognizable by the dot-reading operating apparatus for denoting the selected TV channel so as to transmit the dot-reading information code; and an operating-signal output module for receiving the dot-reading information code transmitted by the operating processor and packing the dot-reading information code into output data signals to send the output data signals;
a TV set-top-box comprising:
an operating-signal processing module including an operating-signal receiving module for receiving the output data signal sent by the dot-reading operating apparatus and
decoding the output data signal into the dot-reading information code and transmitting the dot-reading information code; a memory module for storing the preset TV channel data recognizable by the TV set-top-box and an information table pre-established by the corresponding relationship between the TV channel data and the dot-reading information code; a set-top-box processor for receiving the dot-reading information code from the operating-signal receiving module and reading the information table from the memory module to obtain a remote control data of the selected TV channel corresponding the dot-reading information code and transmitting the remote control data; and an operating-signal transmitting module, for receiving the remote control data from the set-top-box processor and transmitting the remote control data;
and a remote signal processing module including a remote signal receiving module for receiving the remote control data from the operating-signal processing module and transmitting the remote control data; a remote control memory module for storing the remote control signal of the TV set-top-box and a mapping table for establishing the corresponding relationship between the TV channel data and the remote control signal; a remote control processor for receiving the remote control data to obtain a TV recognizable data signal according to the mapping table and transmitting the data signal; and a remote signal transmitting module for receiving the data signal from the remote control processor and sending the data signal.

2. A system using a dot-reading operating apparatus to operate a TV set-top-box according to claim 1, wherein the operating-signal output module of the dot-reading operating apparatus comprises a data receiving unit for receiving the dot-reading information code from the operating processor; a data processing unit for reading the dot-reading information code from the data receiving unit and packing the code into the output data signal; and a data transmitting unit for reading the output data signal processed by the data processing unit and outputting the output data signal to the operating-signal processing module of the TV set-top-box..

3. A system using a dot-reading operating apparatus to operate a TV set-top-box according to claim 1, wherein the operating-signal receiving module of the operating-signal processing module of the TV set-top-box comprises a signal receiving unit for receiving the output data signal from the dot-reading operating apparatus; a signal transforming unit for obtaining the output data signal received by the signal receiving unit and transform output data signal to the dot-reading information code so as to transmitting the dot-reading information code; and a signal transmitting unit for receiving the dot-reading information code from the signal transforming unit and transmitting the dot-reading information code.

4. A system using a dot-reading operating apparatus to operate a TV set-top-box according to claim 1, wherein the image code are microcode printed by infrared ink.

5. A system using a dot-reading operating apparatus to operate a TV set-top-box according to claim 1, wherein the image reading unit of the dot-reading operating apparatus is a CMOS sensor or a CCD sensor.

6. A system using a dot-reading operating apparatus to operate a TV set-top-box according to claim 1, wherein the operating-signal output module of the dot-reading operating apparatus communicates with the operating-signal receiving module of the TV set-top-box by wireless.

7. A system using a dot-reading operating apparatus to operate a TV set-top-box according to claim 1, wherein the operating-signal output module of the dot-reading operating apparatus and the operating-signal receiving module of the TV set-top-box are selected from a wireless USB interface module, a Bluetooth interface module, an infrared interface module, a 1394 interface module, a radio frequency interface module or frequency modulation interface module.
